# EUROPEAN PATENT APPLICATION

(11) **EP 4 053 939 A1**
(43) Date of publication of application: **07.09.2022**
(21) Application number: 21886972.5
(22) Date of filing: 01.11.2021
(51) Int. Cl.: H01M 4/134, H01M 4/1395, H01M 4/04, H01M 4/66, H01M 10/052

(54) **NEGATIVE ELECTRODE FOR LITHIUM METAL BATTERY, COMPRISING PRELITHIATION LAYER, MANUFACTURING METHOD THEREFOR, AND LITHIUM METAL BATTERY COMPRISING SAME**

(30) Priority: 02.11.2020 KR 20200144666
(71) Applicant: LG Energy Solution, Ltd., Seoul 07335 (KR)
(72) Inventor: YUN, Hyunwoong, Daejeon 34122 (KR); CHAE, Ohbyong, Daejeon 34122 (KR); LEE, Jung Pil, Daejeon 34122 (KR)
(74) Representative: Hoffmann Eitle
(86) International application number: PCT/KR2021/015614
(87) International publication number: WO 2022/092978

(57) **Abstract**

The present disclosure provides a negative electrode for a lithium metal battery, including:
a metal current collector substrate, a lithium metal layer formed on at least one surface of the metal current collector substrate, and a pre-lithiation layer formed on the lithium metal layer,
wherein the pre-lithiation layer comprises a pre-lithiated active material, and
wherein the lithium metal layer has a thickness of 1 *µ*m or more, a manufacturing method thereof and a lithium metal battery including the same.

## Description

### [TECHNICAL FIELD]

### Cross Citation with Related Application(s)

This application claims the benefit of Korean Patent Application No. 10-2020-0144666 filed on November 2, 2020 with the Korean Intellectual Property Office, the disclosure of which is incorporated herein by reference in its entirety.

The present disclosure relates to a negative electrode for a lithium metal battery comprising a pre-lithiation layer, a manufacturing method thereof and a lithium metal battery comprising the same.

### [BACKGROUND ART]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high charge/discharge characteristics and lifespan characteristics and being environmentally friendly, in which much research has been carried out and which is now commercialized and widely used.

Generally, the secondary battery has a structure in which a non-aqueous electrolyte solution is impregnated into an electrode assembly comprising a positive electrode, a negative electrode, and a porous separator. Further, the positive electrode is generally manufactured by coating a positive electrode mixture including a positive electrode active material onto aluminum foil, and the negative electrode is manufactured by coating a negative electrode mixture including a negative electrode active material onto a copper foil.

Usually, the positive electrode active material uses a lithium transition metal oxide, and the negative electrode active material uses a carbon-based material.

However, recently, as a negative electrode active material, a lithium metal battery using a lithium metal itself exhibiting a high energy density has been commercialized.

At this time, since the lithium metal used as the negative electrode has a low density (0.54 g/cm³) and a very low standard reduction potential (-3.045 V SHE: standard hydrogen electrode), it is a material that attracts considerable attention as a negative electrode material for a high-energy density battery. Further, despite problems caused by very high chemical activity, recently, with steady increase in the use of mobile communications and portable electronic devices and rapid development thereof, a demand for development of a secondary battery having high energy density is continuously increasing. Therefore, the necessity for using lithium metal negative electrodes continues to emerge.

In this case, when a lithium metal electrode is used as the negative electrode, the lithium metal has very excellent reactivity, and so it reacts with the atmosphere and collapses during the assembly of the secondary battery, and the lithium electrodeposition layer formed by charging causes a severe side reaction by direct contact with the electrolyte, which leads to rapid deterioration of lifespan characteristics.

Therefore, there is a need to develop a negative electrode that can solve the above problems and thus can be used in a lithium metal battery.

### [DETAILED DESCRIPTION OF THE INVENTION]

### [Technical Problem]

The present disclosure has been designed to solve the above-mentioned problems and other technical problems that have yet to be resolved.

Specifically, an object of the present disclosure is to provide a negative electrode that can reduce resistance by minimizing the negative electrode from reacting with the atmosphere during assembly of the secondary battery.

Another object of the present disclosure is to improve the decrease in lifespan characteristics by reducing the internal resistance while increasing the excess Li by a very simple method.

### [Technical Solution]

In order to achieve the above object, according to one embodiment of the present disclosure, there is provided a negative electrode for a lithium metal battery, comprising:
a metal current collector substrate, a lithium metal layer formed on at least one surface of the metal current collector substrate, and a pre-lithiation layer formed on the lithium metal layer,
wherein the pre-lithiation layer comprises a pre-lithiated active material, and
wherein the lithium metal layer has a thickness of 1 *µ*m or more.

Here, the active material may be a carbon-based material, a lithium metal oxide, a metallic compound capable of alloying with lithium, a metal oxide, a lithium-metal alloy, or a mixture of two or more thereof.

The metal current collector substrate may be one selected from the group consisting of copper, stainless steel, aluminum, nickel, titanium, calcined carbon, copper that is surface-treated with dissimilar metal, stainless steel that is surface treated with dissimilar metal, and an aluminum-cadmium alloy.

The metal current collector substrate may be a metal including copper.

In one specific embodiment, a thickness ratio of the lithium metal layer and the pre-lithiation layer may be 99:1 to 1:99.

In one specific embodiment, the pre-lithiation layer may further comprise a binder and a conductive material.

According to another embodiment of the present disclosure, there is provided a method for manufacturing the negative electrode, the method comprising the steps of: (a) electrodepositing or vapor-depositing lithium metal on at least one surface of the metal current collector substrate to form a lithium metal layer; (b) mixing or dispersing active material particles together with a solvent to prepare a slurry or dispersion; (c) coating the slurry or dispersion on the lithium metal layer of the step (a) and drying to form a protective layer, thereby producing a preliminary negative electrode; (d) rolling the preliminary negative electrode and reacting lithium metal with the protective layer, thereby performing pre-lithiation of the protective layer, wherein in the step (a), the loading amount of the lithium metal is formed to be larger than the loading amount of the protective layer, so that the lithium metal layer exits even after pre-lithiation.

In the step (b), the particles may be prepared into a slurry having a particle diameter (D50) of 1 *µ*m to 30 *µ*m, or into a dispersion having a particle diameter (D50) of 1 nm to 1000 nm.

Here, the active material may be a carbon-based material, a lithium metal oxide, a metallic compound capable of alloying with lithium, a metal oxide, a lithium-metal alloy, or a mixture of two or more thereof.

In one specific embodiment, the rolling of the step (d) may be performed in a dry environment where moisture is controlled, or the wet rolling may be performed by further including, between steps (c) and (d), (c') a step of dropping and wetting 10 to 500 *µℓ* of a reduction-resistant liquid on the protective layer.

At this time, the rolling of the step (d) may be performed under a pressure of 0.1 MPa to 5 MPa.

According to yet another embodiment of the present disclosure, there is provided a lithium metal battery in which an electrode assembly is built together with a lithium non-aqueous electrolyte in a battery case, with the electrode assembly comprising:
a negative electrode which comprises a metal current collector substrate, a lithium metal layer formed on at least one surface of the metal current collector substrate, a pre-lithiation layer formed on the lithium metal layer, and a lithium electrodeposition layer formed on the pre-lithiation layer,
wherein the pre-lithiation layer comprises a pre-lithiated active material, and
wherein the lithium metal layer has a thickness of 1 *µ*m or more;
a positive electrode having a structure in which a positive electrode mixture including an active material is coated onto at least one surface of a positive electrode current collector; and
a separator interposed between the negative electrode and the positive electrode.

Here, the active material may be a carbon-based material, a lithium metal oxide, a metallic compound capable of alloying with lithium, a metal oxide, a lithium-metal alloy, or a mixture of two or more thereof.

At this time, the lithium electrodeposition layer may be formed by charging a lithium metal battery.

### [BRIEF DESCRIPTION OF THE DRAWINGS]

Fig. 1 is an image of the negative electrode of Comparative Example 1;
Fig. 2 is an image of the negative electrode of Comparative Example 3; and
Fig. 3 is an image of the negative electrode of Example 1.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there is provided a negative electrode for a lithium metal battery, comprising: a metal current collector substrate, a lithium metal layer formed on at least one surface of the metal current collector substrate, and a pre-lithiation layer formed on the lithium metal layer, wherein the pre-lithiation layer comprises a pre-lithiated active material, and wherein the lithium metal layer has a thickness of 1 *µ*m or more.

The metal current collector substrate may be one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy.

The metal current collector substrate may be a metal including copper.

The lithium metal layer is a negative electrode active material, and the thickness and amount thereof may be determined according to the desired purpose, but is not limited thereto. In the present disclosure, the lithium metal layer must exist to the extent that it can act as a negative electrode active material even after the pre-lithiation layer is formed to function as a lithium metal battery, and it may have at least a thickness of 1 *µ*m or more, 5 *µ*m or more, 10 *µ*m or more, 20 *µ*m or more, and further, it may have a thickness of 200 *µ*m or less, 100 *µ*m or less, 80 *µ*m or less, or 50 *µ*m or less so that the volume of the entire negative electrode does not become too large.

When the thickness is too thin outside the above range, lithium is not sufficient as an active material, but the lithium electrodeposition layer is formed during charging and discharging of the secondary battery and functions like an active material. Thus, when the thickness is too thick, the energy density relative to the volume may be rather decreased, and so it is most preferable to satisfy the above range.

That is, the present application is a negative electrode for a lithium metal battery, wherein the lithium metal layer must exist even after pre-lithiation.

Further, the thickness ratio of the lithium metal layer and the pre-lithiation layer may be designed in consideration of the amount of excess Li provided, energy density, and the like, but in order to prepare the lithium metal battery of the present disclosure, both the lithium metal layer and the pre-lithiation layer must exist to a predetermined thickness or more, and thus, these thickness ratios may be formed in a range of 99:1 to 1:99, and specifically in a range of 5:1 to 1:5. More specifically, as the pre-lithiation layer is formed, the lithium of the lithium metal layer is intercalated into the pre-lithiation layer. The thickness of the lithium metal layer becomes reduced as compared with the thickness of the lithium negative electrode layer that is vapor-deposited or electrodeposited during the manufacturing process, so that the thickness may be made smaller than the thickness of the pre-lithiation layer. The thickness ratio may be 1:1.1 to 1:5, specifically, 1:2 to 1:5, and more specifically, 1:2 to 1:4.

When the thickness of the lithium metal layer is too thin outside the above range, the present disclosure can exhibit only the same energy density versus volume as that of a lithium ion/polymer battery by using an existing carbon-based material or the like as a negative electrode active material, rather than a lithium metal battery for exhibiting high energy density by using a lithium metal as an active material, which is not preferable. When the thickness of the pre-lithiation layer is too thin, the provision of Li is not sufficient, and the lithium electrodeposition layer is also formed at a low density, and thus side reactions due to direct contact with the electrolyte are severe, and rapid deterioration of the lifespan characteristics occurs, which is not preferable.

Meanwhile, the pre-lithiation layer can be formed by pre-lithiating a material capable of occluding and releasing lithium so as to provide the excess Li, whereby the active material, that is, an active material capable of occluding and releasing lithium may be included in a pre-lithiated state.

The active material may be, for example, a carbon-based material, a lithium metal oxide, a metallic compound capable of alloying with lithium, a metal oxide, a lithium-metal alloy, or a mixture of two or more thereof. Specifically, the active material may be a carbon-based material, a lithium metal oxide, a metallic compound, or a metal oxide, which is a material with a large capacity capable of occluding lithium, which may be a Si-based material, a Sn-based material, or a mixture thereof.

Accordingly, the pre-lithiation layer may include an active material in which the above-mentioned materials are pre-lithiated.

By "is pre-lithiated" is meant herein a form in which lithium is diffused and intercalated between active materials capable of occluding and releasing lithium, or is combined with them.

Herein, the carbon-based material may be, for example, carbon such as artificial graphite, natural graphite, graphitized carbon fiber, or amorphous carbon.

The lithium metal oxide may be, for example, LiₓFe₂O₃(0≤x≤1), LiₓWO₂(0≤x≤1), LiₐTi_{b}O₄(0.5≤a≤3, 1≤b≤2.5), and the like.

The metallic compound capable of alloying with lithium may be a compound including a metal forming an alloy with lithium, which may be a metal such as Al, Ge, Mg, Zn, Ag, Si, or Sn.

Further, the metal oxide may be, for example, a material such as SiOₓ(1≤x≤2), SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅.

Finally, the metal in the lithium-metal alloy may be a metal such as Na, K, Rb, Cs, Fr, Be, Sr, Ba, Ra, Mg, Ca, Al, Ge, Pb, As, Sb, Bi, Ag, Zn, Cd, P, or Hg, and the lithium-metal alloy may be an alloy of the above metals and lithium.

Meanwhile, the pre-lithiation layer may include materials that is often used as a negative electrode active material. In the absence of a binder, the binder effect may be supplemented through coating, drying, and rolling, and a conductive material may also not be included. However, when the thickness of the pre-lithiation layer becomes thicker, a binder for further binding them and a conductive material for enhancing conductivity may be additionally more included.

Specific examples of the binder may include polyvinylidene fluoride (PVDF), vinylidene fluoride-hexafluoropropylene copolymer (PVDF-co-HFP), polyvinyl alcohol, polyacrylonitrile, carboxymethylcellulose(CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof. The active material capable of occluding and releasing lithium and the binder may be included in a ratio of 7:3 to 99:1 based on their weight.

When the content of the binder is too large outside the above range, the pre-lithiation layer is formed and thus the amount of excess Li to be achieved can be reduced, and when the content of the binder is too small, binding to the lithium metal layer may not be performed well, which is not preferable.

According to another embodiment of the present disclosure, there is provided a method for manufacturing the negative electrode, the method comprising the steps of: (a) electrodepositing or vapor-depositing lithium metal on at least one surface of the metal current collector substrate to form a lithium metal layer; (b) mixing or dispersing active material particles together with a solvent to prepare a slurry or dispersion; (c) coating the slurry or dispersion on the lithium metal layer of the step (a) and drying to form a protective layer, thereby producing a preliminary negative electrode; and (d) rolling the preliminary negative electrode and reacting lithium metal with the protective layer, thereby performing pre-lithiation of the protective layer, wherein in the step (a), the loading amount of the lithium metal is formed to be larger than the loading amount of the protective layer, so that the lithium metal layer exits even after pre-lithiation.

That is, according to the present disclosure, since the lithium metal must function as a negative electrode active material, the lithium metal layer should exist at a predetermined thickness or more even after pre-lithiation. Therefore, when forming the lithium metal layer, the loading amount of lithium metal should be formed to be larger than the loading amount of the protective layer.

In this case, even if the protective layer is pre-lithiated to form a pre-lithiation layer, the lithium metal layer can maintain a thickness equal to or greater than a predetermined thickness as described above.

For example, when the loading amount of the protective layer is formed as 3mAh/cm², the lithium metal layer has a loading amount of 3 mAh/cm² at the time of having a thickness of 15 *µ*m, and therefore must have a thickness of 16 *µ*m or more.

Meanwhile, in the manufacturing method, a protective layer is formed by coating on the lithium metal layer formed on at least one surface of the metal current collector substrate, and pre-lithiation is performed thereon, but the manufacturing method differs depending on the particle diameter of the active material particles contained in the protective layer.

Specifically, in the step (b), the particles may have a particle diameter (D50) of 1 *µ*m to 30 *µ*m. In this case, the step can be performed by a process of preparing a slurry such as an active material slurry and coating it onto the lithium metal layer. In the step (b), the particles may have a particle diameter (D50) of 1 nm to 1000 nm. In this case, the step can be performed by a process of preparing a pre-dispersion liquid containing these particles and coating it onto the lithium metal layer, as in a method of preparing a conductive material pre-dispersion.

The particle diameter (D50) is the average diameter (D50) of the particles, which means a particle diameter corresponding to a point of 50% in the cumulative distribution of the number of particles relative to the particle diameter. That is, D50 is the particle diameter corresponding to a point of 50% in the cumulative distribution of the number of particles relative to the particle diameter.

This can be measured by using a laser diffraction method. Specifically, the powder to be measured is dispersed in a dispersion medium, and then introduced into a commercially available laser diffraction particle size analyzer (e.g., Microtrac S3500). When the particles pass through the laser beam, the diffraction pattern difference according to the particle size is measured to calculate the particle size distribution. D50 can be measured by calculating the particle diameter corresponding a point of 50% in the cumulative distribution of the number of particles relative to the particle diameter in the analyzer.

In addition, in the manufacturing method as described above, in order to perform the pre-lithiation according to the present disclosure and obtain the effect resulting therefrom, the protective layer preferably has an appropriate porosity in order for lithium of the lithium metal layer to be easily intercalated. Specifically, the porosity of the protective layer preferably has a porosity of at least 5% or more, specifically 10% or more, and more specifically, 20% or more, and it preferably has a porosity of 70% or less, specifically 60% or less, and more specifically 50% or less.

Meanwhile, pre-lithiation of the particles contained in the protective layer can be performed only by performing the rolling after forming the protective layer.

The present inventors confirmed that only by performing the rolling in this way, the lithium of the lithium metal layer reacts with the active materials of the protective layer to perform the pre-lithiation.

Herein, the active material may be a carbon-based material, a lithium metal oxide, a metallic compound capable of alloying with lithium, a metal oxide, a lithium-metal alloy, or a mixture of two or more thereof.

Therefore, according to the present disclosure, since a separate electrolyte solution or the like becomes unnecessary, pre-lithiation can be performed in a simpler and easier way. Therefore, it is possible to save manufacturing cost as well, and impurities such as other solutions are not required, the problem of internal resistance increase does not occur, and thus, it is also excellent from the viewpoint of battery performance.

At this time, the rolling of the step (d) is preferably performed in a dry environment where moisture is controlled, but in some cases, between the steps (c) and (d), the wet rolling can also be performed further including (c') a step of dropping and wetting 10 to 500 *µℓ* of a reduction-resistant liquid on the protective layer.

The reduction-resistant liquid may be, for example, selected from the group consisting of carbonate-based solvents such as dimethyl carbonate, diethyl carbonate, and ethylmethyl carbonate, and ether-based solvents such as 1,2-dimethoxyethane and 1,3-dioxolane, which can facilitate the rapid pre-lithiation even at ultra-low pressure when there is a time constraint

The rolling in the step (d) is not limited as long as it is the extent that pre-lithiation from the lithium metal layer to the protective layer is possible, and the time may differ depending on the strength of rolling, but specifically, the rolling can be performed at a pressure of 0.1 MPa to 5 MPa, and it can be performed, for example, for 30 minutes to 90 hours until the time when the protective layer is completely pre-lithiated.

When the pre-lithiation is performed at a very low pressure or for a very short time outside the above range, the pre-lithiation cannot be sufficiently performed. When the pre-lithiation is performed at a very high pressure or for a very long time, the process time increases compared to the improved effect, which is not preferable in terms of process efficiency.

According to yet another embodiment of the present disclosure, there is provided a lithium metal battery in which an electrode assembly is built together with a lithium non-aqueous electrolyte in a battery case, with the electrode assembly comprising: a negative electrode which comprises a metal current collector substrate, a lithium metal layer formed on at least one surface of the metal current collector substrate, a pre-lithiation layer formed on the lithium metal layer, and a lithium electrodeposition layer formed on the pre-lithiation layer, wherein the pre-lithiation layer comprises a pre-lithiated active material, and wherein the lithium metal layer has a thickness of 1 *µ*m or more; a positive electrode having a structure in which a positive electrode mixture including an active material is coated onto at least one surface of a positive electrode current collector; and a separator interposed between the negative electrode and the positive electrode.

Herein, the active material may be a carbon-based material, a lithium metal oxide, a metal compound capable of alloying with lithium, a metal oxide, a lithium-metal alloy, or a mixture of two or more thereof.

Meanwhile, the lithium electrodeposition layer is formed by charging a lithium metal battery.

That is, according to the embodiment of the present disclosure, a lithium metal battery is provided using a lithium metal layer, and a lithium electrodeposition layer subsequently formed as a negative electrode active material, wherein even by a simpler method of forming a protective layer on the lithium metal layer and performing the pre-lithiation by rolling, side reactions and the like that cause problems during the manufacturing process of the lithium metal battery and during the operation process thereof can be prevented, and the lifespan characteristics can be improved by providing excess Li.

Meanwhile, the positive electrode has a structure in which a positive electrode mixture including an active material is coated onto at least one surface of a positive electrode current collector.

The positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the positive electrode current collector may have a thickness of 3 to 500 *µ*m, and may have fine irregularities formed on the surface of the current collector to increase the adhesion of the positive electrode active material. For example, it may be used in various forms such as films, sheets, foils, nets, porous bodies, foams, and nonwoven fabrics.

The positive electrode active material as the active material may include, for example, a layered compound such as lithium nickel oxide (LiNiO₂), or a compound substituted with one or more transition metals; lithium manganese oxides such as chemical formulae Li₁₊ₓMn₂₋ₓO₄ (where x = 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M = Co, Mn, Al, Cu, Fe, Mg, B or Ga, and x= 0.01- 0.3); lithium manganese composite oxide represented by chemical formulae LiMn₂₋ₓMₓO₂ (where M = Co, Ni, Fe, Cr, Zn or Ta, and x = 0.01-0.1) or Li₂Mn₃MO₈ (where M = Fe, Co, Ni, Cu or Zn ); LiNiₓMn₂₋ₓO₄; LiMn₂O₄ in which a part of Li in the chemical formula is substituted with an alkaline earth metal ion; a disulfide compound; Fe₂(MoO₄)₃, and the like, without being limited thereto.

The positive electrode mixture may further include a conductive material and a binder together with the positive electrode active material described above.

The conductive material is typically added in an amount of 0.1 to 30% by weight, specifically 1 to 10% by weight, and more specifically 1 to 5% by weight based on the total weight of the positive electrode mixture layer. The conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; carbon fluoride powder; metal powders such as aluminum powder, and nickel powder; conductive whiskey such as zinc oxide and potassium titanate; conductive metal oxides such as titanium oxide; conductive materials such as polyphenylene derivatives can be used.

The binder is a component that assists in coupling of an active material, a conductive material, and the like, and in coupling of a current collector, and typically, may be added in an amount of 0.1 to 30% by weight, specifically 1 to 10% by weight, more specifically 1 to 5% by weight based on the total weight of the positive electrode mixture layer. An example of the binder may include polyvinylidene fluoride, polyvinylidene fluoride-hexafluoropropylene, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene polymer (EPDM), sulfonated EPDM, styrene-butadiene rubber, fluorine rubber, various copolymers, and the like.

The separator is an insulating thin film having high ion permeability and mechanical strength. The pore diameter of the separator is generally 0.01 to 10 *µ*m, and the thickness is generally 5 to 300 *µ*m. As such separator, for example, chemical resistant and hydrophobic olefin-based polymers such as polypropylene; sheets or non-woven fabrics made of glass fiber or polyethylene is used. When a solid electrolyte such as a polymer is used as the electrolyte, the solid electrolyte may also serve as a separator.

The lithium non-aqueous electrolyte generally includes a lithium salt and a non-aqueous solvent. As the non-aqueous solvent, a non-aqueous organic solvent, an organic solid electrolyte, an inorganic solid electrolyte, or the like is used, but is not limited thereto.

As examples of the non-aqueous electrolyte, mention may be made of non-protic organic solvents, such as N-methyl-2-pyrrolidone, propylene carbonate, ethylene carbonate, butylene carbonate, dimethyl carbonate, diethyl carbonate, gamma-butyro lactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups, and the like.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The lithium salt is a material that is readily soluble in the non-aqueous electrolyte. The lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

In addition, in order to improve charge/discharge characteristics, flame retardancy and the like, the non-aqueous electrolyte may further include, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like. In some cases, in order to impart incombustibility, the electrolyte may further include halogen-containing solvents, such as carbon tetrachloride and ethylene trifluoride. Furthermore, in order to improve high-temperature retention characteristics, the electrolyte may further include carbon dioxide gas. In addition, it may further include fluoro-ethylene carbonate (FEC), propene sultone (PRS), and the like.

The battery case is not limited as long as it has a structure capable of housing an electrode assembly, and may be a pouch type battery, or a prismatic or cylindrical battery case made of a metal can, which is known in the art.

Hereinafter, preferred examples of the present disclosure, comparative examples for comparing them, and experimental examples for evaluating them are described. However, it will be obvious to those skilled in the art that these examples are for illustrative purposes only and various changes and modifications can be made without deviating from the scope and spirit of the present description, and it goes without saying that such modifications and modifications fall within the scope of the appended claims.

### <Comparative Example 1>

A commercially available copper current collector (I2B, Iljin Materials) was prepared as a metal current collector substrate.

A lithium foil (Li foil, thickness: 20 *µ*m) was placed so as to be opposed to one surface of the copper current collector, and then the current collector and the lithium foil were laminated and roll-pressed to the extent that they did not detach, thereby forming a lithium metal layer.

Further, artificial graphite (particle diameter (D50): 9 *µ*m), and binder (PVDF) were mixed in a weight ratio of 9:1 in an NMP solvent so that the solid content: NMP solvent was 5:5 by volume, thereby forming a protective layer slurry. The resulting slurry was coated to a thickness of 40 *µ*m onto the lithium metal layer, dried to form a protective layer. Thereby, the negative electrode of Comparative Example 1 was obtained.

### <Comparative Example 2>

A commercially available copper current collector (I2B, Iljin Materials) was prepared as a metal current collector substrate.

A lithium foil (Li foil, thickness: 30 *µ*m) was placed so as to be opposed to one surface of the copper current collector, and then the current collector and the lithium foil were laminated and roll-pressed to the extent that they did not detach, thereby forming a lithium metal layer.

Further, artificial graphite (particle diameter (D50): 9 *µ*m), and binder (PVDF) were mixed in a weight ratio of 9:1 in an NMP solvent so that the solid content: NMP solvent was 5:5 by volume, thereby forming a protective layer slurry. The resulting slurry was coated to a thickness of 40 *µ*m on the lithium metal layer, dried to form a protective layer. Thereby, the negative electrode was obtained. 1M LiPF₆ was dissolved in a mixed solvent of ethylene carbonate (EC) and diethyl carbonate (DEC) in a volume ratio of 50:50 to prepare a pre-lithiation solution. The above produced negative electrode was impregnated in this solution, and then left at a temperature of 25°C. Finally, a negative electrode of Comparative Example 2 having a thickness of 60 *µ*m excluding the current collector was obtained in the same manner as in Comparative Example 1.

### <Comparative Example 3>

A commercially available copper current collector (I2B, Iljin Materials) was prepared as a metal current collector substrate.

A lithium foil (Li foil, thickness: 15 *µ*m) was placed so as to be opposed to one surface of the copper current collector, and then the current collector and the lithium foil were laminated and roll-pressed to the extent that they did not detach, thereby forming a lithium metal layer.

Further, artificial graphite (particle diameter (D50): 9 *µ*m), and binder (PVDF) were mixed in a weight ratio of 9:1 in an NMP solvent so that the solid content: NMP solvent was 5:5 by volume, thereby forming a protective layer slurry. The resulting slurry was coated to a thickness of 60 *µ*m onto the lithium metal layer, dried to form a protective layer, thereby obtaining the negative electrode. The negative electrode was rolled at a pressure of 1 MPa, left in a dry room for 12 hours, and all active material layers were pre-lithiated, so that a negative electrode of Comparative Example 3 having a thickness of 60 *µ*m excluding the current collector was obtained in the same manner as in Comparative Example 1.

### <Example 1>

A commercially available copper current collector (I2B, Iljin Materials) was prepared as a metal current collector substrate.

A lithium foil (Li foil, thickness: 30 *µ*m) was placed so as to be opposed to one surface of the copper current collector, and then the current collector and the lithium foil were laminated and roll-pressed to the extent that they did not detach, thereby forming a lithium metal layer.

Further, artificial graphite (particle diameter (D50): 9 *µ*m), and binder (PVDF) were mixed in a weight ratio of 9:1 in an NMP solvent so that the solid content: NMP solvent was 5:5 by volume, thereby forming a protective layer slurry. The resulting slurry was coated to a thickness of 40 *µ*m onto the lithium metal layer, dried to form a protective layer, thereby obtaining a negative electrode. The negative electrode was rolled at a pressure of 1 MPa, and then left in a dry room for 12 hours, so that a negative electrode of Example 1 having a thickness of 60 *µ*m excluding the current collector was obtained in the same manner as in Comparative Example 1.

### <Example 2>

A commercially available copper current collector (I2B, Iljin Materials) was prepared as a metal current collector substrate.

A lithium foil (Li foil, thickness: 25 *µ*m) was placed so as to be opposed to one surface of the copper current collector, and then the current collector and the lithium foil were laminated and roll-pressed to the extent that they did not detach, thereby forming a lithium metal layer.

Further, lithium metal oxide Li₄Ti₅O₁₂ (particle diameter (D50): 1 *µ*m), and binder (PVDF) were mixed in a weight ratio of 9:1 in an NMP solvent so that the solid content : NMP solvent was 5:5 by volume, thereby forming a protective layer slurry. The resulting slurry was coated to a thickness of 40 *µ*m on the lithium metal layer, dried to form a protective layer. Then, the resulting negative electrode was rolled at a pressure of 1 MPa, left in a dry room for 12 hours, and all active material layers were pre-lithiated, so that a negative electrode of Example 2 having a thickness of 60 *µ*m excluding the current collector was obtained in the same manner as in Comparative Example 1.

### <Experimental Example 1>

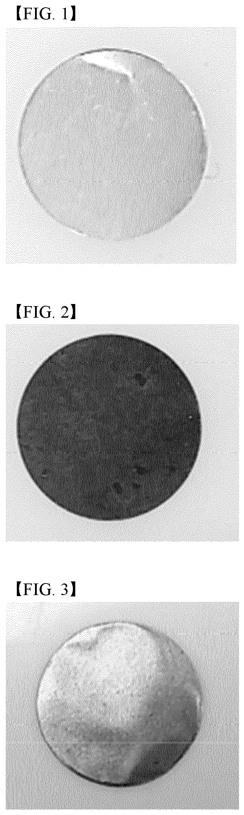

A negative electrode in which a protective layer was not formed was used as a reference, and surface photographs of the reference negative electrode as well as the negative electrodes of Comparative Example 1 and Example 1 were taken, and are shown in Figs. 1 to 3 below.

Referring to Figs. 1 to 3, it can be confirmed that the negative electrode of Comparative Example 1 in which the protective layer was formed was coated with a carbon-based material to form a black protective layer unlike Fig. 1 in which only the lithium metal layer was coated. Meanwhile, referring to Fig. 3, it can be confirmed that the carbon-based material was coated similarly, but was pre-lithiated with the lithium metal layer by rolling, and the color was changed to gold. It can be confirmed therefrom that the pre-lithiation was well performed by rolling.

### <Experimental Example 2>

LiNi_{0.8}Mn_{0.1}CO_{0.1}O₂ as a positive electrode active material, carbon black as a conductive material, and polyvinylidene fluoride (PVdF) as a binder were used, respectively. The positive active material: the conductive material: the binder were mixed in a weight ratio of 96:2:2, and NMP as a solvent was added to the resulting mixture to prepare a positive electrode active material slurry.

The positive electrode active material slurry was coated at a loading amount of 4.05 mAh/cm² per one side of an aluminum current collector, and then dried and rolled to obtain a positive electrode.

The electrolyte solution contains a solvent in which propylene carbonate (PC), diethyl carbonate (DEC) and dimethyl carbonate (DMC) were mixed in a volume ratio of 1:2:1 (PC:DEC:DMC). The electrolyte solution containing 1M LiFSI, 1M LiPF₆ and 30 wt.% of fluoroethylene carbonate (FEC) in the total amount of the electrolyte solution was prepared.

A polyethylene separator (thickness: 20 um) was interposed between the negative electrodes of Comparative Examples 1 to 3 and Examples 1 to 2 and the positive electrode, then the electrolyte solution was injected, and a CR2032 coin cell was manufactured according to a conventional method to obtain lithium metal batteries.

The lithium metal batteries manufactured above were charged and discharged 300 times under the following conditions, and then the 300-time discharge capacity retention relative to the one-time discharge capacity was calculated, and the results are shown in Table 1 below.

Charge: 0.2C, CC/CV, 4.25V, 1/20C cut-off

Discharge: 0.5C, CC, 3.0 V, cut-off

**[Table 1]**

| | one-time discharge capacity (mAh) | 300-time capacity retention (%) |
|---|---|---|
| Comparative Example 1 | 6.05 | 80 |
| Comparative Example 2 | 6.13 | 88 |
| Comparative Example 3 | 6.10 | 87 |
| Example 1 | 6.15 | 98 |
| Example 2 | 6.17 | 97 |

Referring to Table 1, it was confirmed that all the assembled cells exhibited similar initial discharge capacity.

However, it was confirmed that in the case of the cells in which a part of the lithium metal layer was reacted with the protective layer and the pre-lithiation of the protective layer was performed (Examples 1 and 2), the lifespan characteristics were excellent.

Meanwhile, it can be confirmed that in the case of Comparative Example 3, in which all of the lithium metal layers was reacted with the protective layer, the lithium metal layer disappeared, and only the pre-lithiated protective layer remained, the lifespan characteristics were better than Comparative Example 1 in which pre-lithiation was not performed, but sufficient lifespan characteristics were not exhibited as compared with Examples 1 and 2, in which a part of the lithium metal layer remained and the lithium metal was sufficiently used as an active material as in the present disclosure.

In addition, it can be confirmed that Comparative Example 2, in which pre-lithiation was performed with an electrolyte solution, also had better lifespan characteristics than Comparative Example 1 in which pre-lithiation was not performed, but as compared to the case of performing pre-lithiation by rolling as in the present disclosure, sufficient lifespan characteristics could not be exhibited due to the increased internal resistance of the cell due to the occurrence of a side reaction of the electrolyte solution.

Based on the above disclosure, various applications and modifications can be carried out by those of ordinary skill in the art without deviating from the spirit and scope of the present disclosure.

### [industrial Applicability]

As described above, the negative electrode according to an embodiment of the present disclosure includes a pre-lithiation layer as a protective layer on the lithium metal layer, and thus it is possible to minimize the lithium metal from reacting with the atmosphere during the assembly process of the secondary battery, which is thus effective in lowering the increase in resistance.

Further, by performing the pre-lithiation rather than simply forming a protective layer with materials capable of occluding and releasing lithium, it is possible to increase the excess Li and improve the lifespan characteristics as compared with the case where it is not so.

Moreover, the pre-lithiation is performed by adopting a very simple method like rolling, whereby not only the process is simplified and the cost was reduced, but also there is no problem such internal resistance increase by solvents as compared with the pre-lithiation method using an electrolytic solvent, which is thus preferable in terms of battery performance.

## Claims

1. A negative electrode for a lithium metal battery, comprising:
a metal current collector substrate, a lithium metal layer formed on at least one surface of the metal current collector substrate, and a pre-lithiation layer formed on the lithium metal layer,
wherein the pre-lithiation layer comprises a pre-lithiated active material, and
wherein the lithium metal layer has a thickness of 1 *µ*m or more.

2. The negative electrode according to claim 1, wherein:
the active material is a carbon-based material, a lithium metal oxide, a metallic compound capable of alloying with lithium, a metal oxide, a lithium-metal alloy, or a mixture of two or more thereof.

3. The negative electrode according to claim 1, wherein:
the metal current collector substrate is one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy.

4. The negative electrode according to claim 1, wherein:
the metal current collector substrate is a metal including copper.

5. The negative electrode according to claim 1, wherein:
a thickness ratio of the lithium metal layer and the pre-lithiation layer is 99:1 to 1:99.

6. The negative electrode according to claim 1, wherein:
the pre-lithiation layer further comprises a binder and a conductive material.

7. A method for manufacturing the negative electrode according to claim 1, the method comprising the steps of:
(a) electrodepositing or vapor-depositing lithium metal on at least one surface of the metal current collector substrate to form a lithium metal layer;
(b) mixing or dispersing active material particles together with a solvent to prepare a slurry or dispersion;
(c) coating the slurry or dispersion on the lithium metal layer of the step (a) and drying to form a protective layer , thereby producing a preliminary negative electrode; and
(d) rolling the preliminary negative electrode and reacting lithium metal with the protective layer, thereby performing pre-lithiation of the protective layer,
wherein in the step (a), the loading amount of the lithium metal is formed to be larger than the loading amount of the protective layer, so that the lithium metal layer exits even after pre-lithiation.

8. The method for manufacturing the negative electrode according to claim 7, wherein:
in the step (b), the particles are prepared into a slurry having a particle diameter (D50) of 1 *µ*m to 30 *µ*m, or into a dispersion having a particle diameter (D50) of 1 nm to 1000 nm.

9. The method for manufacturing the negative electrode according to claim 7, wherein:
the active material is a carbon-based material, a lithium metal oxide, a metallic compound capable of alloying with lithium, a metal oxide, a lithium-metal alloy, or a mixture of two or more thereof.

10. The method for manufacturing the negative electrode according to claim 7, wherein:
the rolling of the step (d) is performed in a dry environment where moisture is controlled.

11. The method for manufacturing the negative electrode according to claim 7,
which further comprises, between steps (c) and (d),
(c') a step of dropping and wetting 10 to 500 *µℓ* of a reduction-resistant liquid on the protective layer.

12. The method for manufacturing the negative electrode according to claim 7, wherein:
the rolling of the step (d) is performed under a pressure of 0.1 MPa to 5 MPa.

13. A lithium metal battery in which an electrode assembly is built together with a lithium non-aqueous electrolyte in a battery case, with the electrode assembly comprising:
a negative electrode which comprises a metal current collector substrate, a lithium metal layer formed on at least one surface of the metal current collector substrate, a pre-lithiation layer formed on the lithium metal layer, and a lithium electrodeposition layer formed on the pre-lithiation layer,
wherein the pre-lithiation layer comprises a pre-lithiated active material, and
wherein the lithium metal layer has a thickness of 1 *µ*m to 100 *µ*m;
a positive electrode having a structure in which a positive electrode mixture including an active material is coated onto at least one surface of a positive electrode current collector; and
a separator interposed between the negative electrode and the positive electrode.

14. The lithium metal battery according to claim 13, wherein:
the active material is a carbon-based material, a lithium metal oxide, a metallic compound capable of alloying with lithium, a metal oxide, a lithium-metal alloy, or a mixture of two or more thereof.

15. The lithium metal battery according to claim 13, wherein:
the lithium electrodeposition layer is formed by charging a lithium metal battery.
